**Europäisches Patentamt**

**European Patent Office**

**Office européen des brevets**

(11) Numéro de publication: **0 085 268**

**A1**

## (12) DEMANDE DE BREVET EUROPEEN

(21) Numéro de dépôt: **82402397.2**

(22) Date de dépôt: **29.12.82**

(51) Int. Cl.³: **H 02 M 1/08**

(30) Priorité: **29.01.82 FR 8201478**

(43) Date de publication de la demande:
**10.08.83 Bulletin 83/32**

(84) Etats contractants désignés:
**AT BE CH DE GB IT LI LU NL SE**

(71) Demandeur: **INTERNATIONAL HOME SYSTEMS**
**Société Anonyme dite:**
**10-12 rue de Reims**
**F-75013 Paris(FR)**

(72) Inventeur: **Martin, Jacques**
**13 rue Delambre**
**F-77400 Lagny(FR)**

(72) Inventeur: **Villain, Roger**
**Hameau de Saint-Benoist**
**F-78610 Le Perray(FR)**

(74) Mandataire: **Bonnetat, Christian et al,**
**Cabinet PROPI Conseils 23 rue de Léningrad**
**F-75008 Paris(FR)**

(54) Dispositif pour l'alimentation dosée d'une charge électrique.

(57) Dispositif pour l'alimentation dosée d'une charge électrique (12) à partir d'une source alternative comportant, d'une part, un organe de commande volontaire (2,3), tel qu'un potentiomètre, et d'autre part, un interrupteur commandé (11).

Selon l'invention, ce dispositif est caractérisé en ce qu'il comporte des moyens (1,2,3,4) pour émettre un créneau dont la durée est fonction d'une référence, des moyens (6) pour détecter le passage à zéro de la tension de ladite source alternative, des moyens (7) d'adaptation des impulsions issues desdits moyens de détection et des moyens (9) permettant d'appliquer à l'électrode de commande dudit interrupteur commandé (11) lesdites impulsions provenant des moyens d'adaptation (7) pendant une durée correspondant à celle desdits créneaux.

Fig. 1

EP 0 085 268 A1

## Dispositif pour l'alimentation dosée d'une charge électrique.

La présente invention concerne un dispositif pour l'alimentation dosée d'une charge électrique. Elle convient particulièrement, quoique non exclusivement, à la commande d'éléments chauffants, par exemple des éléments chauffants à infrarouge.

Selon l'invention, le dispositif pour l'alimentation dosée d'une charge électrique à partir d'une source alternative, comportant, d'une part, un organe de commande volontaire, tel qu'un potentiomètre, susceptible de délivrer une grandeur électrique de référence représentative de la valeur désirée pour l'alimentation de ladite charge et, d'autre part, un interrupteur commandé pour contrôler le passage du courant appliqué par ladite source alternative à la charge, est remarquable en ce qu'il comporte des moyens pour émettre une impulsion à chaque période de la tension de la source alternative, des moyens pour émettre un créneau ou analogue dont la durée est fonction de la valeur de ladite grandeur électrique de référence et est égale à un nombre complet de périodes de la source alternative, des moyens pour synchroniser lesdits créneaux par lesdites impulsions, des moyens pour détecter le passage par zéro de la tension de ladite source alternative, des moyens d'adaptation des impulsions issues desdits moyens de détection et des moyens permettant d'appliquer à l'électrode de commande dudit interrupteur commandé lesdites impulsions provenant des moyens d'adaptation pendant une durée correspondant à celle desdits créneaux.

Ainsi, grâce au dispositif selon l'invention, non seulement on peut adresser à la charge une alimentation qui est une fonction de la valeur affichée sur l'organe de commande volontaire, mais encore la commande de l'interrupteur commandé se fait au moment du passage par zéro de la tension d'alimentation, de sorte qu'il n'en résulte aucun parasite.

De préférence, on utilise un interrupteur commandé tel qu'un triac réalisant une mémorisation des impulsions qu'il reçoit pour la durée de la demi-période alternative en cours. Les moyens engendrant les créneaux peuvent comporter un

2

comparateur recevant, d'une part, la grandeur électrique de référence et, d'autre part, un signal en rampe déclenché par lesdits moyens émettant une impulsion à chaque période de la tension de la source alternative. Dans un mode avantageux de réalisation, les moyens pour synchroniser les créneaux avec la tension d'alimentation comportent une mémoire dont l'entrée d'horloge reçoit les impulsions issues des moyens émettant une impulsion à chaque période de la tension de la source alternative.

Avantageusement, afin d'obtenir un découplage galvanique entre les parties de commande et de puissance du dispositif, on prévoit un couplage opto-électronique entre l'électrode de commande de l'interrupteur commandé et lesdits moyens pour appliquer sur celle-ci les impulsions provenant des moyens d'adaptation. Ces moyens d'adaptation peuvent être constitués par un générateur d'impulsions délivrant des impulsions retardées et de plus grande largeur que les impulsions qu'ils reçoivent des moyens de détection de passage par zéro.

La présente invention s'applique particulièrement bien dans le cas où le réseau d'alimentation est triphasé. En effet, selon l'invention, un dispositif pour l'alimentation dosée d'une charge électrique triphasée à partir d'une source alternative triphasée, comportant, d'une part, un organe de commande volontaire, tel qu'un potentiomètre, susceptible de délivrer une grandeur électrique de référence représentative de la valeur désirée pour l'alimentation de ladite charge et, d'autre part, trois interrupteurs commandés pour contrôler le passage du courant appliqué par chacune des phases de la source à la charge, est remarquable en ce qu'il comporte des moyens pour émettre une impulsion à chaque fois que les tensions de deux desdites phases de la source d'alimentation sont égales, des moyens pour émettre en réponse auxdites impulsions un créneau ou analogue dont la durée est fonction de la valeur de ladite grandeur électrique de référence, des moyens pour synchroniser lesdits créneaux par lesdites impulsions des premiers moyens pour détecter le passage à l'égalité des tensions desdites deux phases, des premiers moyens d'adaptation des impulsions issues desdits premiers moyens de détection, des seconds moyens de détection pour émettre une impulsion à chaque fois que la tension de la troisième des phases de la source d'alimentation passe par zéro, des seconds moyens d'adaptation des impulsions issues desdits seconds moyens de détection, des moyens pour appliquer aux électrodes de commande des interrupteurs commandés respectifs les impulsions provenant desdits premiers et seconds moyens d'adaptation pendant une durée correspondant à celle desdits créneaux.

De préférence, lesdits moyens pour appliquer auxdites électrodes de commande les impulsions provenant desdits premiers et seconds moyens d'adaptation comportent deux portes logiques ET recevant chacune, sur une de leurs entrées, lesdits créneaux, et, sur l'autre entrée, les impulsions provenant respectivement des premiers et seconds moyens d'adaptation, les sorties des deux portes ET étant réunies aux entrées d'une porte OU actionnant en parallèle les interrupteurs commandés associés auxdites deux phases , tandis que l'interrupteur commandé associé à ladite troisième phase est commandé par la sortie de la porte ET recevant les impulsions provenant des seconds moyens d'adaptation.

Les figures du dessin annexé feront bien comprendre comment l'invention peut être réalisée.

La figure 1 donne le schéma synoptique du dispositif selon l'invention dans sa version monophasée.

La figure 2 montre le schéma synoptique du dispositif selon l'invention dans sa version triphasée.

4

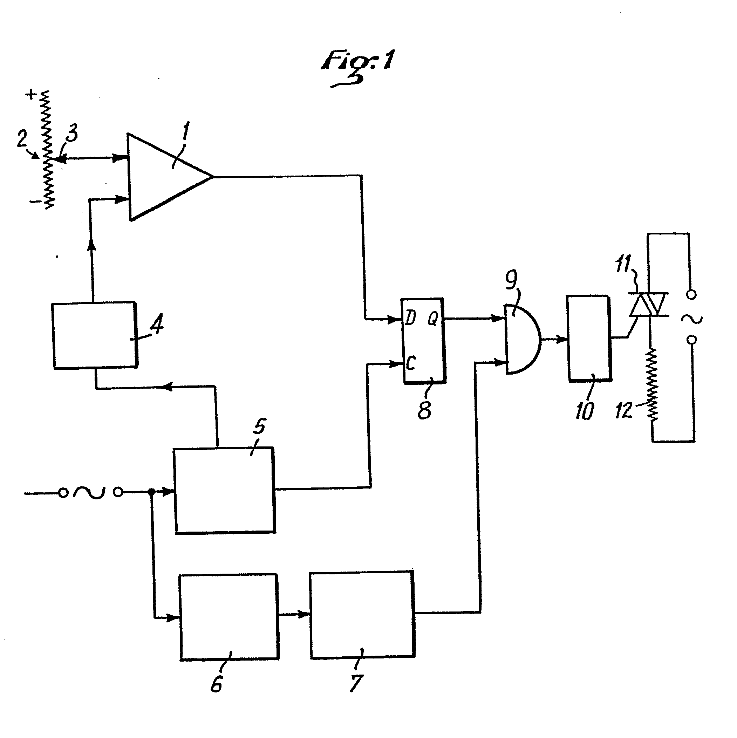

Le dispositif montré par la figure 1 comporte un comparateur 1 dont une entrée reçoit une tension prélevée sur un potentiomètre 2 au moyen d'un curseur déplaçable 3, l'autre entrée dudit comparateur 1 recevant un signal en forme de rampe provenant d'un générateur cyclique de rampe 4. La rampe du générateur 4 est amorcée par une impulsion d'un générateur 5 engendrant une impulsion à chaque période du secteur d'alimentation auquel il est relié, la durée de la rampe étant égale à un nombre complet de périodes de la tension alternative. Le secteur alimente également un détecteur de zéro 6, qui fournit une impulsion à chaque passage par zéro de la tension dudit secteur.

De façon connue, un tel détecteur délivre une impulsion étroite, disposée à cheval sur le zéro, c'est-à-dire se trouvant pour une part en regard de l'alternance positive et pour son autre part en regard de l'alternance négative de la tension du secteur. De plus, une telle impulsion serait trop étroite pour commander un interrupteur commandé, par exemple un triac. Aussi, en aval du détecteur de zéro 6, on agence un générateur 7, qui, réponse à chaque impulsion de détection de passage par zéro délivre une impulsion de largeur convenable pour la commande d'un interrupteur commandé et se trouvant entièrement en regard d'une seule demi-alternance de la tension du secteur.

Le signal de sortie du comparateur 1, qui est constitué d'une suite de créneaux dont la durée correspond à la longueur de la rampe émise par le générateur 4 pour laquelle la tension de ladite rampe et celle prélevée par le curseur 3 sur le potentiomètre 2 sont égales, est adressée à une mémoire 8, dont l'entrée d'horloge est reliée à la sortie du générateur 5. A la sortie de la mémoire 8, les créneaux issus du comparateur 1 sont synchronisés avec les impulsions issues du générateur 5 et donc, avec la tension du réseau. Ces créneaux sont appliqués à l'une des entrées d'une porte logique 9 de type ET, dont l'autre entrée reçoit les impulsions provenant du générateur 7. Ainsi, ces impulsions du générateur

5

7 ne passent la porte 9 que pendant la durée desdits créneaux.

Un dispositif de couplage opto-électronique 10, qui permet la séparation galvanique du dispositif de commande et du dispositif d'alimentation de puissance, attaque la gâchette d'un triac 11 monté en série avec une charge 12 aux bornes du secteur d'alimentation. Le triac 11 mémorise les impulsions du générateur 7 qu'il reçoit et reste conducteur pendant toute la durée des créneaux. Ainsi, la durée d'alimentation de la charge 12 est une fonction directe de la commande du curseur 3 du potentiomètre 2.

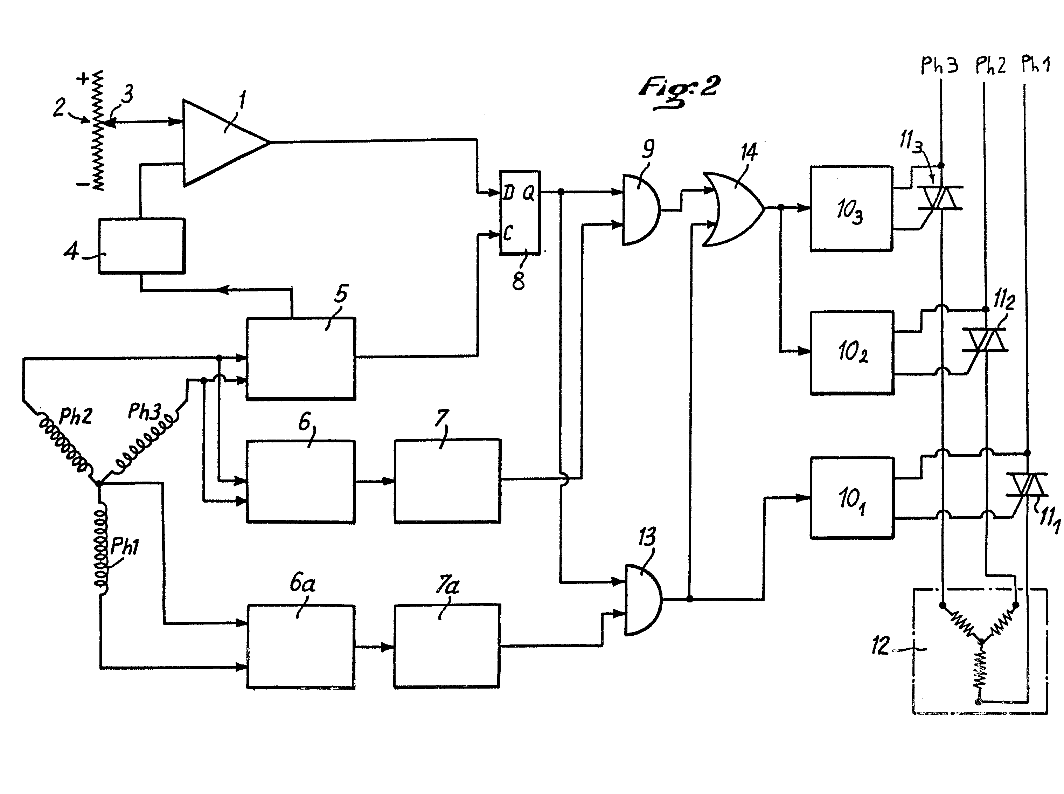

Dans le mode de réalisation triphasé du dispositif selon l'invention montré par la figure 2, on retrouve l'agencement des éléments 1 à 9 décrite en regard de la figure 1. Cet agencement 1 à 9 est destiné à recevoir la somme de deux des phases $Ph_2$ et $Ph_3$ du réseau triphasé d'alimentation, par exemple disponibles sur deux enroulements d'un transformateur. Ainsi, dans le mode de réalisation de la figure 2, la somme des phases $Ph_2$ et $Ph_3$ est traitée de la même façon que la phase unique du réseau appliqué au dispositif de la figure 1, les "passages à zéro" de la somme des phases $Ph_2$ et $Ph_3$ étant les instants auxquels les tensions desdites phases se coupent.

De plus, le dispositif de la figure 2 comporte un détecteur de passage par zéro 6a recevant la phase $Ph_1$. Les impulsions qui en sont issues sont traitées par un générateur d'impulsions 7a qui les retardent par rapport aux passages par zéro pour qu'elles ne soient plus à cheval sur ceux-ci et qui les allongent pour qu'elles englobent les instants auxquels les tensions des phases $Ph_2$ et $Ph_3$ se coupent.

Les impulsions de sortie du générateur 7a sont adressées à l'une des entrées d'une porte logique 13, de type ET, dont l'autre entrée reçoit, de la sortie de la mémoire 8, les créneaux du comparateur 1, synchronisés sur la somme des

6

phases $Ph_2$ et $Ph_3$, c'est-à-dire avec le système triphasé $Ph_1$, $Ph_2$ et $Ph_3$.

Les sorties des deux portes ET 9 et 13 sont reliées aux entrées d'une porte logique 14, de type OU, dont la sortie est couplée, par deux dispositifs opto-électroniques en parallèle $10_2$ et $10_3$, à la gâchette de deux triacs $11_2$ et $11_3$, respectivement disposés en série dans deux phases du système d'alimentation triphasé $Ph_1$, $Ph_2$ et $Ph_3$ d'une charge triphasée 12. De plus, la sortie de la porte ET 13 commande, par l'intermédiaire d'un dispositif de couplage opto-électronique $10_1$, la gâchette d'un triac $11_1$ montée en série sur la troisième phase dudit système triphasé $Ph_1$, $Ph_2$ et $Ph_3$.

REVENDICATIONS

1.- Dispositif pour l'alimentation dosée d'une charge électrique (12) à partir d'une source alternative, comportant, d'une part, un organe de commande volontaire (2,3), tel qu'un potentiomètre, susceptible de délivrer une grandeur électrique de référence représentative de la valeur désirée pour l'alimentation de ladite charge (12) et, d'autre part, un interrupteur commandé (11) pour contrôler le passage du courant appliqué par ladite source alternative à la charge (12),
caractérisé en ce qu'il comporte des moyens (5) pour émettre une impulsion à chaque période de la tension de la source alternative, des moyens (1,2,3,4) pour émettre en réponse auxdites impulsions un créneau ou analogue dont la durée est fonction de la valeur de ladite grandeur électrique de référence et est égale à un nombre complet de périodes de la source alternative, des moyens (8) pour synchroniser lesdits créneaux par lesdites impulsions, des moyens (6) pour détecter le passage par zéro de la tension de ladite source alternative, des moyens (7) d'adaptation des impulsions issues desdits moyens de détection et des moyens (9) permettant d'appliquer à l'électrode de commande dudit interrupteur commandé (11) lesdites impulsions provenant des moyens d'adaptation (7) pendant une durée correspondant à celle desdits créneaux.

2.- Dispositif pour l'alimentation dosée d'une charge électrique triphasée (12) à partir d'une source alternative triphasée, comportant, d'une part, un organe de commande volontaire (2,3), tel qu'un potentiomètre, susceptible de délivrer une grandeur électrique de référence représentative de la valeur désirée pour l'alimentation de ladite charge (12) et, d'autre part, trois interrupteurs commandés ($11_1$, $11_2$, $11_3$) pour contrôler le passage du courant appliqué par chacune des phases ($Ph_1$, $Ph_2$, $Ph_3$) de la source à la charge, caractérisé en ce qu'il comporte des moyens (5) pour émettre une impulsion à chaque fois que des tensions de deux ($Ph_2$, $Ph_3$) desdites phases de la source d'alimentation sont égales, des

8

moyens (1,2,3,4) pour émettre en réponse auxdites impulsions un créneau ou analogue dont la durée est fonction de la valeur de ladite grandeur électrique de référence, des moyens (8) pour synchroniser lesdits créneaux par lesdites impulsions des premiers moyens (6) pour détecter le passage à l'égalité des tensions desdites deux phases, des premiers moyens d'adaptation (7) des impulsions issues desdits premiers moyens de détection (6), des seconds moyens de détection (6a) pour émettre une impulsion à chaque fois que la tension de la troisième ($Ph_1$) des phases de la source d'alimentation passe par zéro, des seconds moyens d'adaptation (7a) des impulsions issues desdits seconds moyens de détection (6a), des moyens (9,13,14) pour appliquer aux électrodes de commande des interrupteurs commandés respectifs les impulsions provenant desdits premiers et seconds moyens d'adaptation (7,7a) pendant une durée correspondant à celle desdits créneaux.

3.- Dispositif selon la revendication 2, caractérisé en ce que lesdits moyens pour appliquer auxdites électrodes de commande les impulsions provenant desdits premiers et seconds moyens d'adaptation comportent deux portes logiques (9,10) ET recevant chacune, sur une de leurs entrées lesdits créneaux, et, sur l'autre entrée les impulsions provenant respectivement des premiers et seconds moyens d'adaptation (7,7a), les sorties des deux portes ET étant réunies aux entrées d'une porte OU (14) actionnant en parallèle les interrupteurs commandés ($10_2$, $10_3$) associés auxdites deux phases ($Ph_2$,$Ph_3$), tandis que l'interrupteur commandé ($10_1$) associé à ladite troisième phase ($Ph_1$) est commandé par la sortie de la porte ET (13) recevant les impulsions provenant des seconds moyens d'adaptation (7a).

4.- Dispositif selon l'une quelconque des revendications 1 à 3, caractérisé en ce que le ou les interrupteurs commandés (11, $11_1$, $11_2$, $11_3$) réalisent une mémorisation des impulsions reçues.

5.- Dispositif selon l'une quelconque des revendications 1 à 4,

caractérisé en ce que les moyens engendrant les créneaux comportent un comparateur (1) recevant, d'une part, la grandeur électrique de référence et, d'autre part, un signal en rampe (4) déclenché par lesdits moyens (5) émettant une impulsion à chaque période de la tension de la source alternative.

6.- Dispositif selon l'une quelconque des revendications 1 à 5,

caractérisé en ce que les moyens pour synchroniser les créneaux avec la tension d'alimentation comportent une mémoire 8 dont l'entrée d'horloge reçoit les impulsions issues des moyens (5) émettant une impulsion à chaque période de la tension de la source alternative.

7.- Dispositif selon l'une quelconque des revendications 1 à 6,

caractérisé en ce qu'un dispositif de couplage opto-électronique $(10, 10_1, 10_2, 10_3)$ est prévu entre l'électrode de commande de l'interrupteur commandé $(11, 11_1, 11_2, 11_3)$ et lesdits moyens (9,13,14) pour appliquer sur celle-ci les impulsions provenant des moyens d'adaptation (7,7a).

8.- Dispositif selon l'une quelconque des revendications 1 à 7, caractérisé en ce que les moyens d'adaptation (7,7a) sont constitués par un générateur d'impulsions délivrant des impulsions retardées et de plus grande largeur que les impulsions qu'ils reçoivent des moyens de détection de passage par zéro (6,6a).

Fig:1

Fig. 2

2/2

0085268

| DOCUMENTS CONSIDERES COMME PERTINENTS | | Page 2 |
|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 519 793 (SOCIETE ANONYME FRANCAISE DU FERODO) * Page 2, colonne de gauche, ligne 41 - page 3, colonne de gauche, ligne 33; figure * | 2,3,4, 8 | |
| | --- | | |
| A | DE-A-2 334 409 (SCHALTBAU) * Page 2, ligne 6 - page 4, ligne 12; figure * | 7,8 | |
| | ----- | | |

DOMAINES TECHNIQUES RECHERCHES (Int. Cl. ³)

Le present rapport de recherche a ete etabli pour toutes les revendications

| Lieu de la recherche LA HAYE | Date d'achèvement de la recherche 07-04-1983 | Examinateur POINT A.G.F. |
|---|---|---|

Office européen
des brevets

**RAPPORT DE RECHERCHE EUROPEENNE**

Numéro de la demande

EP 82 40 2397

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl. ³) |
| X,Y | ELECTRONIC ENGINEERING, vol. 50, no. 611, septembre 1978, page 23, Londres, GB<br>A.E. WHITTAKER: "AC power control by delta/sigma converter" * En entier *<br><br>--- | 1,4-8 | H 02 M 1/03 |
| Y | RADIO MENTOR ELECTRONIC, vol. 38, no. 2, février 1972, pages 65-69, Munich, DE<br>M. REICHERT: "Electronic - ein modernes Heinzelmännchen" * Page 66, colonne de droite, ligne 14 - page 67, colonne de gauche, ligne 9; figure 2 *<br><br>--- | 1,4,5 | |
| Y | INTERNATIONAL JOURNAL OF ELECTRONICS, vol. 47, no. 4, octobre 1979, pages 425-427, Londres, GB<br>S. ASHOKA KRISHNA BHAT: "A 3-phase zero-voltage switching scheme using a dual timer LM566" * pages 425,426, paragraphe 2, description et figures 1,2 *<br><br>--- | 2,4,7 8 | DOMAINES TECHNIQUES RECHERCHES (Int. Cl. ³)<br><br>H 02 M 1/00<br>G 05 F 1/00 |
| A | FR-A-2 165 915 (HOWDEN SUPERTHERM)<br>* Page 2, ligne 40 - page 4, ligne 23; figures 1-7 *<br><br>--- -/- | 1,2,4 5 | |

Le présent rapport de recherche a été établi pour toutes les revendications

| Lieu de la recherche | Date d'achèvement de la recherche | Examinateur |
|---|---|---|
| LA HAYE | 07-04-1983 | POINT A.G.F. |